# FASCICULE DE BREVET EUROPEEN

(11) **EP 0 781 215 B1**
(45) Date de publication et mention de la délivrance du brevet: **09.12.1998**
(21) Numéro de dépôt: 95931266.1
(22) Date de dépôt: 19.09.1995
(51) Int. Cl.: B60P 3/08, B61D 47/00, B60S 9/14

(54) **SEMI-REMORQUE NOTAMMENT PORTE-VEHICULES ET SON PROCEDE DE CHARGEMENT ET DE DECHARGEMENT EN VEHICULES**
SATTELAUFLIEGER, INSBESONDERE ZUM TRANSPORT VON FAHRZEUGEN UND VERFAHREN FÜR SEIN VERLADEN AUF FAHRZEUGE UND SEIN ENTLADEN VON FAHRZEUGEN
SEMI-TRAILER, IN PARTICULAR FOR VEHICLES, AND METHOD FOR LOADING AND UNLOADING VEHICLES

(30) Priorité: 23.09.1994 FR 9411552
(43) Date de publication de la demande: 02.07.1997
(73) Titulaire: LOHR INDUSTRIE S.A., F-67980 Hangenbieten (FR)
(72) Inventeur: LOHR, Robert, F-67980 Hangenbieten (FR)
(74) Mandataire: Metz, Paul
(86) Numéro de dépôt international: FR9501203
(87) Numéro de publication internationale: WO9609185

(56) Documents cités:
- EP-A- 0 447 574
- DE-A- 3 425 698
- FR-A- 2 056 077

## Description

L'invention se rapporte à une semi-remorque de transport routier selon les caractéristiques du préambule de la revendication indépendante 1 et un procédé selon les caractéristiques du préambule de la revendication indépendante 12.

Les semi-remorques présentent divers avantages importants dans le domaine du transport routier. Il s'agit d'abord de leur indépendance logistique par rapport au véhicule à moteur connu sous le terme tracteur. Ensuite, leur capacité maximale de chargement et de transport ou charge utile se montre intéressante car elle avoisine au moins 30 tonnes et peut dépasser cette valeur dans le cas d'une structure plus légère, par exemple en aluminium. Finalement, les efforts de standardisation dans la construction et au niveau des moyens d'accouplement ont fait baisser sensiblement les prix de revient.

Outre leur limitation en longueur par les codes nationaux européens de la route, les semi-remorques ne présentent pas d'inconvénients particuliers concernant leur utilisation en porte-véhicules. Elles peuvent être pourvues en effet de la plupart des équipements et dispositifs spécifiques à ce type de chargement.

Par ailleurs, dans le cadre du transport mixte rail/route et plus généralement du ferroutage, les constructeurs de matériel ferroviaire et les constructeurs de véhicules routiers ont imaginé diverses solutions intéressantes pour les opérations de chargement/déchargement rapide des véhicules routiers directement sur les ou des châssis-wagons.

L'une de ces solutions déjà brevetée par le déposant selon FR-A-2.680.492, FR-A-2.688.179 et FR-A-2.688.180 consiste à utiliser une structure porteuse ferroviaire à plancher bas dont l'une des extrémités est ouverte et conformée en brancard, extrémité par laquelle la structure-wagon est montée désolidarisable du bogie.

L'autre extrémité est fermée et se trouve montée pivotante sur le bogie ferroviaire. Elle constitue un organe de pivotement assurant la liaison de traction et le mouvement de dégagement de la structure-wagon en vue de sa présentation en oblique pour les opérations de mise en place ou d'enlèvement d'une semi-remorque par la simple utilisation de son tracteur.

La dissociation longitudinale est également prévue selon laquelle la structure-wagon est libérée après désolidarisation du bogie et évacuation de la structure directement adjacente à l'extrémité qui est libérée.

Ce système nécessite cependant, dans ses deux configurations d'utilisation, l'intervention d'un moyen extérieur ou de moyens intégrés à la structure-Wagon assurant le levage de l'extrémité en brancard pour son désengagement du bogie et son soutien pendant les mouvements de désengagement/engagement et de pivotement/dégagement de l'ensemble.

On connaît par la publication EP 0 447 574 LEITZ un ensemble additionnel porteur escamotable pour une semi-remorque sous la forme de deux trains additionnels de roues disposés de part et d'autre du train principal permettant de réaliser des mouvements transversaux par rapport à sa ligne de roulage.

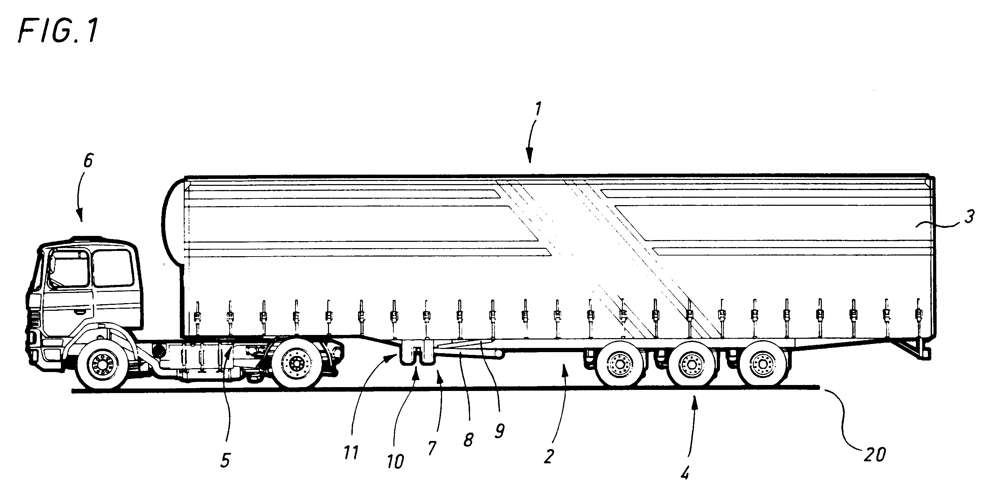

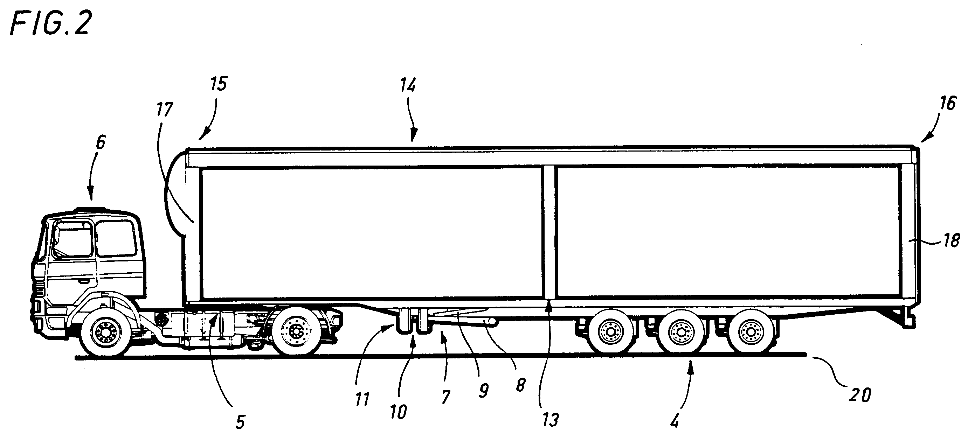

Ces trains additionnels porteurs sont multiroues comme représentés sur les figures 1, 2, 3.1, 3.2 et 5, et associés à un mécanisme de levage à bras oblique et à montant télescopique.

On peut même déduire des dessins et de la description que ces trains de roues sont à direction fixe.

Les systèmes de commande, d'articulation et de support peuvent être complexes sans pour autant modifier la fonction principale comme indiqué ci-après.

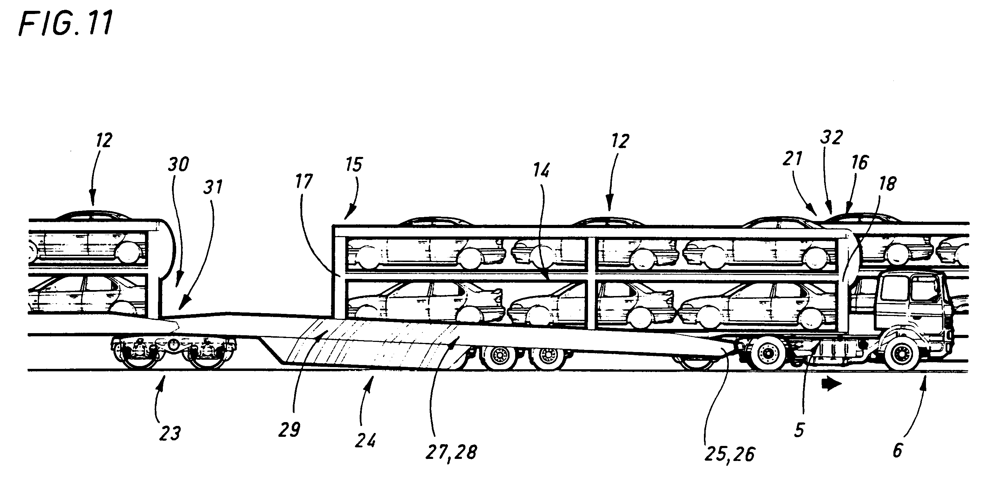

La fonction principale de ces trains additionnels porteurs est illustrée par la figure 11.

Cette fonction doit permettre à la semi-remorque de pouvoir se charger sur un wagon plat recouvert par exemple d'un platelage en treillis ou alvéolaire par un simple mouvement de translation perpendiculaire au wagon c'est-à-dire transversal à la semi-remorque qui est placée pour la manoeuvre le long du wagon.

Ce mouvement s'effectue par la force motrice du camion tracteur placé perpendiculairement au corps de la semi-remorque comme le montre la figure 11. La semi-remorque est d'abord levée dans son ensemble jusqu'à ce que son train principal porteur quitte légèrement le sol, puis soutenue par ses trains de roues additionnels escamotables. Elle est ensuite poussée transversalement au wagon et roule sur ses trains de roues additionnels jusqu'à sa mise en place de transport sur le wagon.

Les moyens divulgués dans cette demande de brevet ne sont que des moyens additionnels de roulage dans une direction transversale à la direction normale de roulage et des moyens de relevage des essieux de la remorque. Ces moyens additionnels de roulage équipent le châssis d'une semi-remorque mais il n'est suggéré à aucun moment de les utiliser pour baisser le châssis d'un côté seulement et réaliser ainsi une rampe inclinée de montée et de descente pour les charges transportées.

La présente invention a pour double but, d'abord dans le cadre d'un véhicule routier, de conférer à ce véhicule routier du type semi-remorque de nouveaux et importants avantages déterminants dans le transport de voitures et ensuite, dans le cadre de l'application au transport rail-route, de procurer une solution techniquement et économiquement optimale pour le transfert et le montage d'une semi-remorque sur une structure ferroviaire de façon totalement autonome par rapport à l'utilisation de moyens extérieurs.

Ce double but est atteint avec la semi-remorque selon l'invention qui peut charger, décharger et transporter des véhicules et embarquer à bord de trains ferroviaires.

A cet effet, elle se compose d'un châssis, d'un train de roues portant le châssis, d'un plan de chargement inférieur et d'une carrosserie formée au moins de quatre poteaux d'angle selon deux couples transversaux et se caractérise en ce qu'elle comprend vers l'avant et en sous-face de son châssis un moyen de support et de levage, relié à une interface de liaison en fluides moteurs pour l'abaissement en inclinaison vers l'avant et le relevage, et un plateau supérieur de chargement mobile verticalement sous l'effet de dispositifs de levage indépendants en commande et en fonctionnement entre chaque couple transversal, ledit plateau supérieur venant s'incliner en position de chargement en véhicules ou servant de structure de toit dans le cas d'un transport classique de marchandises.

Cette autonomie apporte une simplification importante dans le matériel mis en oeuvre et dans les opérations de manoeuvre de chargement, de déchargement et de transfert.

Ainsi, il n'est plus nécessaire de faire intervenir des moyens externes de levage ou de compliquer la réalisation de la structure-wagon en prévoyant des béquilles ou autres moyens de levage intégrés.

Par ailleurs, si l'on ne dispose pas de moyens externes pour placer les semi-remorques porte-véhicules sur les structures-wagons ou pour les enlever, il s'avère utile de pouvoir charger ou décharger les véhicules transportés alors que les semi-remorques sont déjà ou encore en place sur la structure-wagon. Cette possibilité prend tout son intérêt sur les aires d'attente disposant d'un branchement ferroviaire chez les constructeurs ou sur les dépôts régionaux ou nationaux.

Ainsi, l'invention confère de nombreux et importants avantages aux semi-remorques dans leur application aux transports de véhicules outre celui bien connu de libérer le tracteur après leur arrivée à destination.

Elles peuvent notamment être chargées et déchargées en véhicules en l'absence du tracteur et elles jouent individuellement le rôle de moyen moteur dans les phases de manoeuvres de la structure-wagon dans le cas d'un transport mixte rail-route.

Les caractéristiques techniques et d'autres avantages de l'invention sont consignés dans la description qui suit, effectuée à titre d'exemple non limitatif sur un mode d'exécution en référence aux dessins accompagnants dans lesquels :
- la figure 1 est une vue de profil d'une semi-remorque quelconque attelée et équipée d'un moyen de soutien et de levage ;
- la figure 2 est une vue de profil d'une semi-remorque porte-voitures inclinable possédant le même moyen de soutien et de levage ;
- les figures 3 et 4 sont des vues de profil montrant la semi-remorque inclinable porte-voitures de la figure 2 dans deux phases caractéristiques de chargement ;
- la figure 5 est une vue de profil montrant la semi-remorque en position horizontale entièrement chargée en voitures ;
- les figures 6 à 12 sont des vues de profil et en plan illustratives des phases de manoeuvre de la structure ferroviaire dans l'application de la semi-remorque ci-dessus à un transport ferroviaire pour lequel elle constitue la charge.

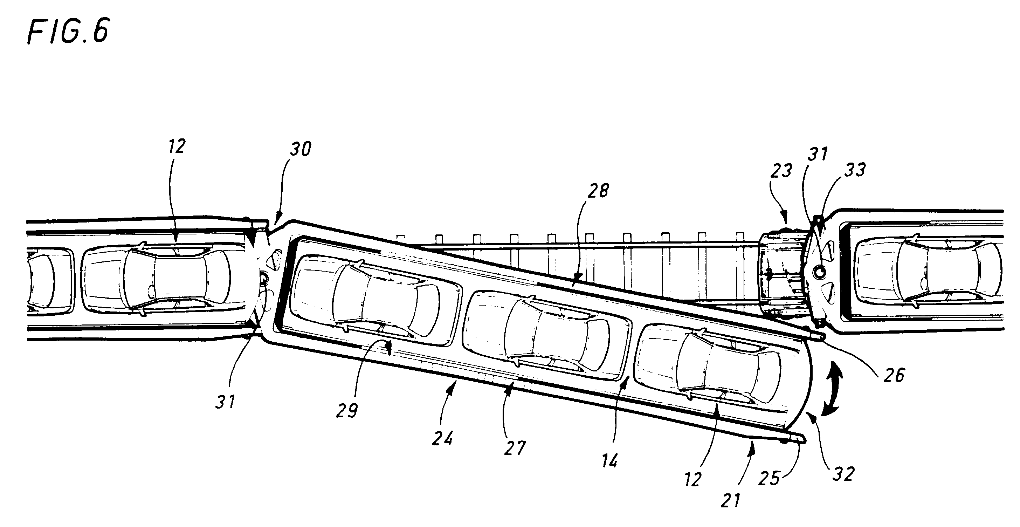

   - figure 6 : alignement ou désalignement de la structure-wagon ;

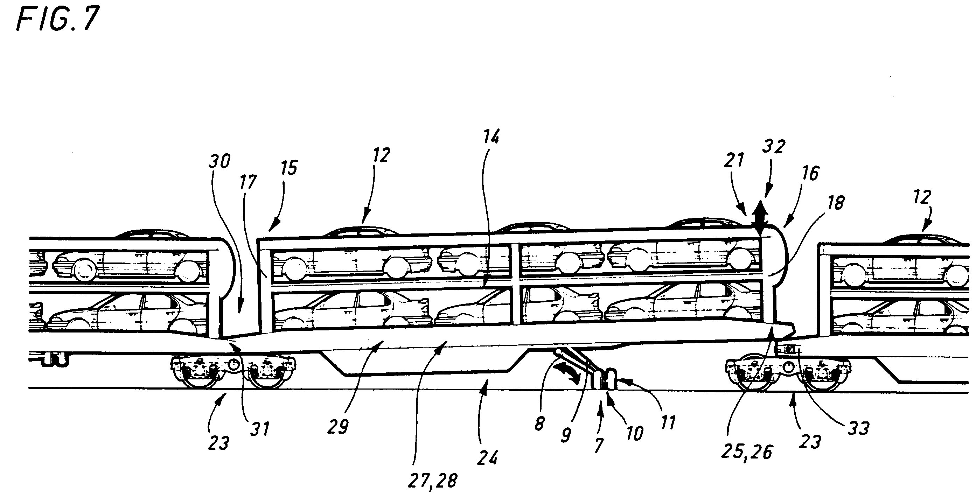

   - figure 7 : engagement ou désengagement avec le bogie ;

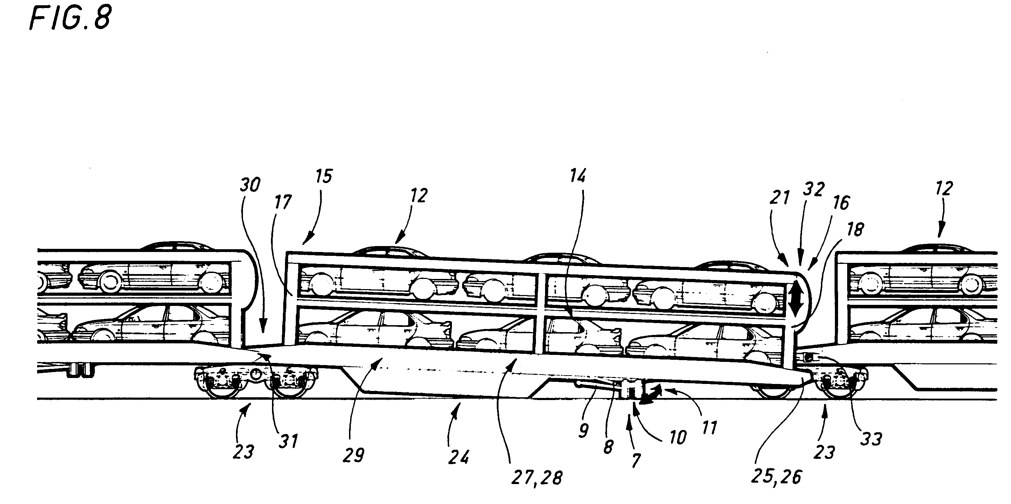

   - figure 8 : pose inclinée au sol ou relevage à partir du sol ;

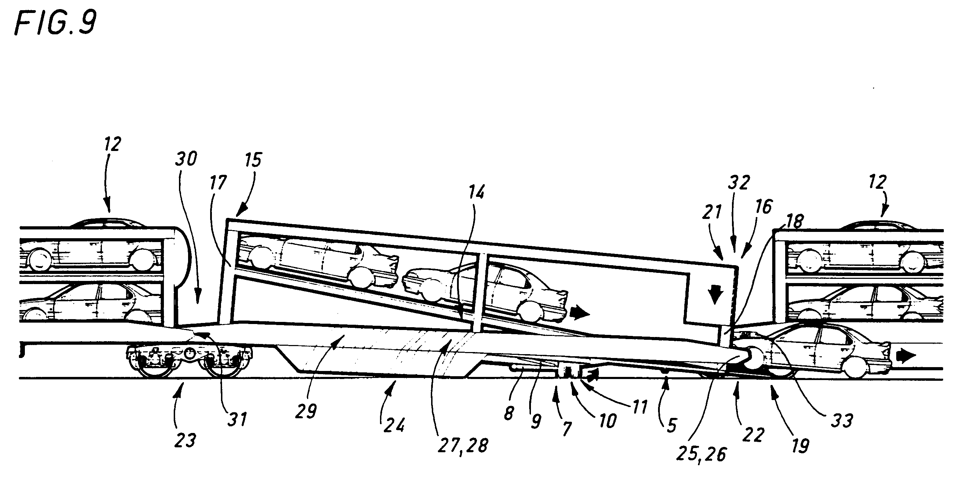

   - figure 9 : déchargement individuel des voitures ;

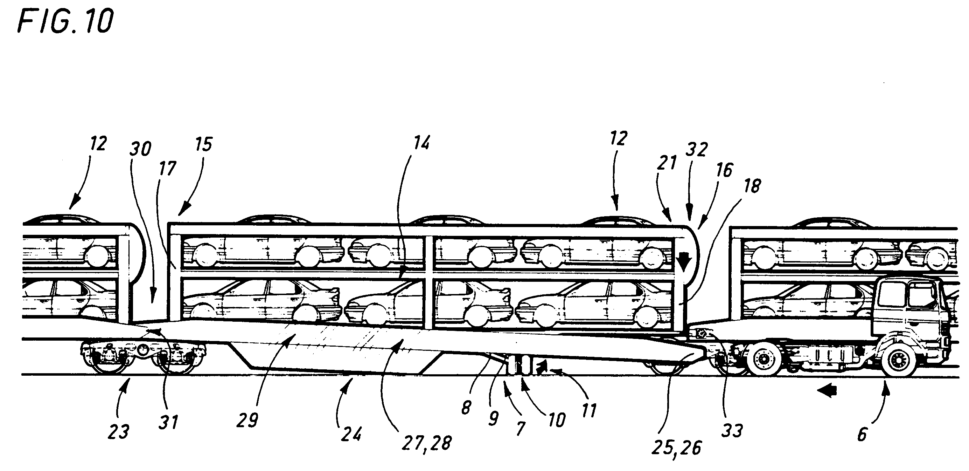

   - figure 10 et 11 : enlèvement de la semi-remorque par un tracteur ;

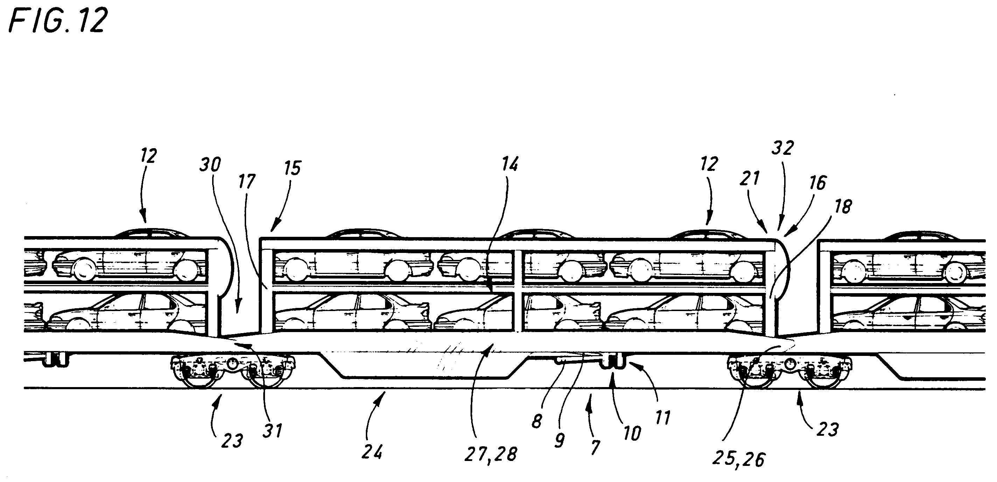

   - figure 12 : semi-remorque en place et train ferroviaire constitué.

Dans sa version de transport non spécialisé, telle que représentée sur la figure 1, une semi-remorque 1 présente classiquement un châssis 2 surmonté d'une protection par bâche 3 ou autre moyen, un train 4 de roues multi-essieux supportant le châssis 2 et un moyen d'accouplement 5 du type cheville ouvrière coopérant avec la sellette installée sur un véhicule à moteur de type tracteur 6.

Selon une des originalités de l'invention, le châssis 2 présente en sous face et vers l'avant, par exemple à l'emplacement approximatif des béquilles traditionnelles de soutien, un moyen de support et de levage 7 actionné électriquement ou hydrauliquement et de préférence commandé à distance.

La fonction principale de ce moyen concerne le soutien, l'inclinaison et le relevage. A titre optionnel, il associe ou regroupe les fonctions de roulage et de relevage. La contrainte générale est de pouvoir s'abaisser suffisamment jusqu'à ce que l'extrémité avant de la semi-remorque arrive en contact avec le sol.

Ce moyen de soutien et de relevage peut prendre différentes formes techniques. Il peut s'agir d'abord de béquilles télescopiques ou d'un bras pivotant actionné par un moyen mécanique ou de façon plus complète d'un véritable train de roulage relevable sous l'effet d'un vérin de manoeuvre.

Ce moyen est représenté de façon générale sur les figures. Il comporte un bras pivotant 8 actionné par un vérin 9. Il est alimenté en énergie par un bloc d'interface (non représenté) qui reçoit à raccordement rapide une liaison en énergie provenant d'une source extérieure existant habituellement sur les terminaux ou les aires portuaires ou dépôts.

Le moyen d'actionnement du bras 8 peut être alimenté de façon autonome, c'est-à-dire à partir d'une source d'énergie embarquée à bord de la semi-remorque.

Ce bras 8 est équipé à son extrémité libre d'une plaque d'appui, d'un sabot ou de toute autre surface de contact d'appui avec le sol. Dans le cas de la variante représentée, il comporte à cette extrémité libre un moyen de roulement en tant qu'ensemble roulant 10 formé de deux roues jumelées équipées de pneumatiques et portées par un arbre de roue 11 monté à l'extrémité libre du bras. L'autre extrémité de ce bras 8 est articulée de façon pivotante au châssis 2 de la semi-remorque 1.

Ce moyen de roulement est à direction fixe transversale ou à orientation variable. Il est, par exemple, motorisé pour parfaire le caractère autonome des manoeuvres.

A l'observation des figures relatives à la mise en oeuvre de la semi-remorque 1 représentée à titre d'exemple, il apparaît que le moyen 7 de soutien et de levage peut servir de train additionnel de roulage dans les manoeuvres, c est-à-dire qu'il assure non seulement les fonctions d'abaissement en inclinaison et de relevage de la semi-remorque mais aussi son déplacement lors des mouvements de manoeuvre à la manière d'une roue jockey.

Cette dernière caractéristique ne s'applique pas toujours.

Dans le cas particulier du transport de voitures telles que 12 et plus généralement de véhicules, la semi-remorque est équipée d'un plan de chargement inférieur 13 fixe sous la forme d'un platelage ou d'un plancher et d'un plateau de chargement supérieur 14 mobile verticalement en présentation horizontale ou inclinée le long de portiques, par exemple sous la forme de deux couples transversaux 15 et 16 de poteaux d'angle identiques en correspondance 17 et 18 par l'action de dispositifs de levage prévus dans ces poteaux, non visibles sur les figures.

Ces dispositifs de déplacement du plateau supérieur 14 sont indépendants en commande et en fonctionnement. Il sont du type, par exemple, à vis et écrou prisonnier. Ainsi, le plateau de chargement supérieur 14 peut adopter une position inclinée vers l'avant qui, combinée avec l'inclinaison générale de la semi-remorque 1 et avec l'adjonction éventuelle d'une rampe d'accès 19 prévue en extrémité, permettra aux voitures d'accéder sans dommages, de façon autonome, à leur emplacement de transport sur le plan inférieur 13 ou le plateau supérieur 14 de chargement.

Il est à noter que le plateau supérieur 14 sert de toit ou de structure de toit dans le cas d'un autre type de transport. On peut donc rapidement et facilement, par une simple manoeuvre suivie d'adaptations mineures, passer d'un type de chargement spécialisé porte-véhicules à un chargement de fret général.

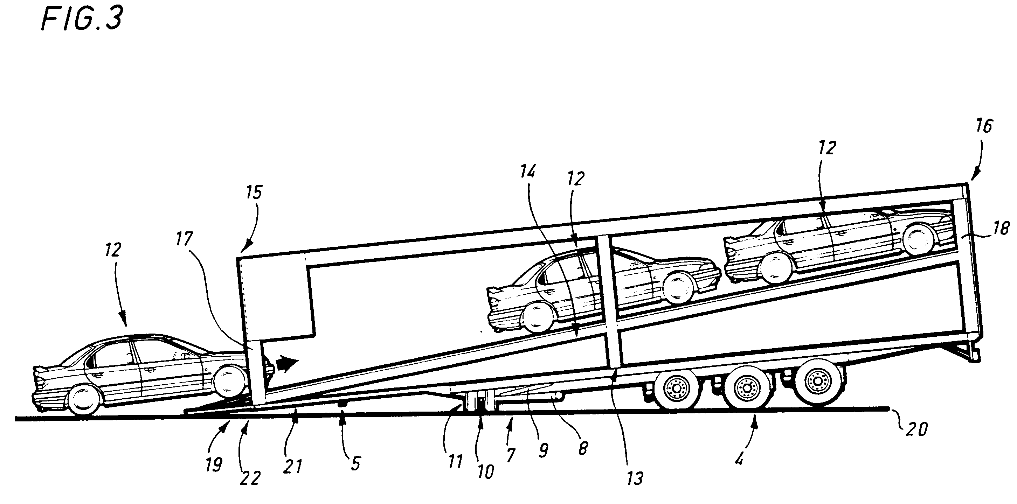

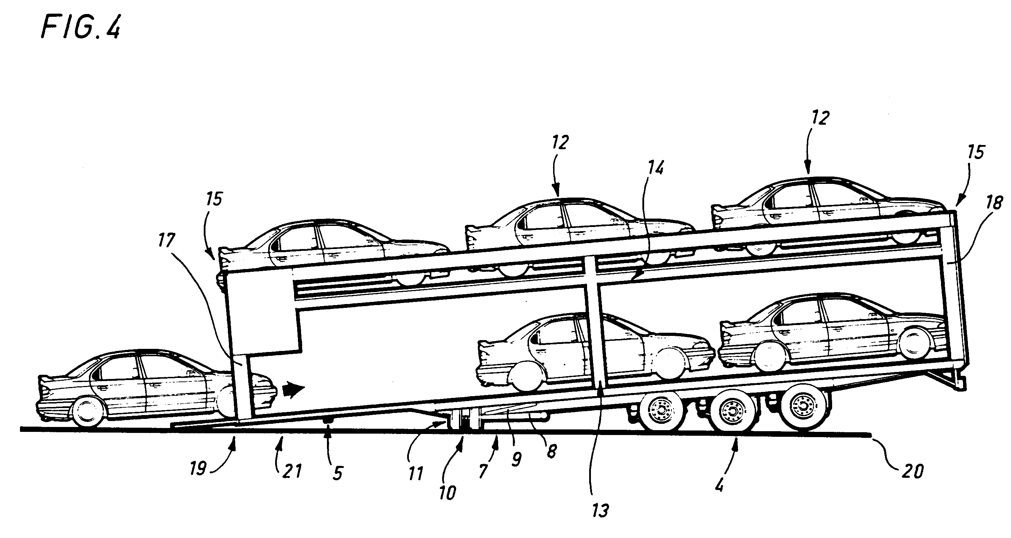

Les phases de chargement et de déchargement de la semi-remorque avec des voitures sont illustrées par les figures 3, 4 et 5.

Après désaccouplement, la semi-remorque 1 repose sur le sol 20 maintenue en position horizontale par son moyen de soutien et de levage 7. Pour la préparer en vue des opérations de chargement, on abaisse en l'inclinant le plateau supérieur 14 jusqu'à une position basse inclinée adaptée. La semi-remorque est ensuite elle-même inclinée vers l'avant par l'abaissement du moyen de soutien et de levage 7 jusqu'à ce que son extrémité avant 21 touche le sol 20. La succession des opérations ci-dessus peut se dérouler dans l'ordre inverse.

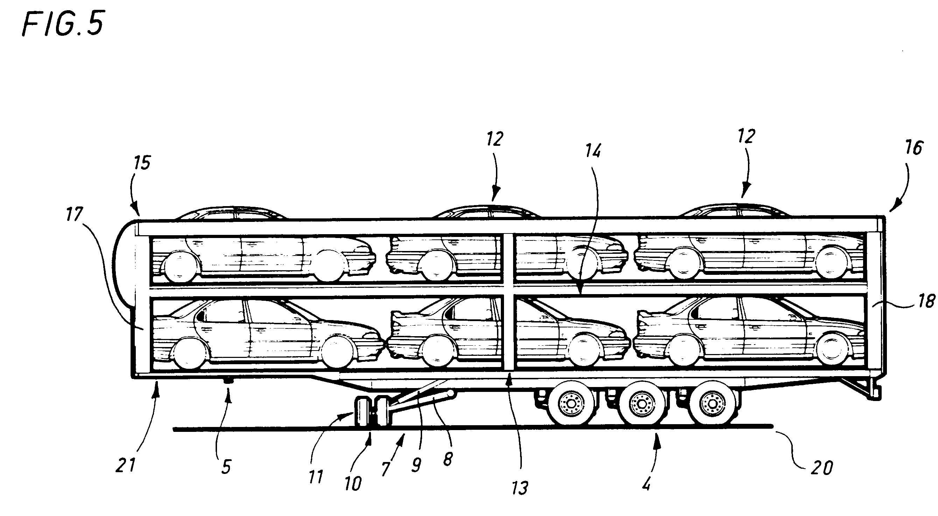

Après mise en place éventuelle de la rampe d'extrémité 19, et abaissement puis inclinaison du plateau supérieur 14 jusqu'à la position la plus basse de son extrémité avant 22, les véhicules peuvent accéder et être mis en place sur le plateau supérieur 14. Celui-ci est manoeuvré en position haute dès son chargement. Débute alors le chargement du plan inférieur 13 qui se trouve en position inclinée en raison de la position elle-même inclinée de la semi-remorque. Après enlèvement éventuel de la rampe 19, le moyen de soutien et de levage 7 est actionné en relevage jusqu'à la position horizontale de la semi-remorque correspondant à sa position de transport comme représenté sur la figure 5.

Le déchargement s'effectue exactement dans l'ordre inverse.

Un des principaux avantages de la semi-remorque selon l'invention concerne sa mise en place et sa participation aux manoeuvres d'engagement et de désengagement du bogie 23 et d'alignement et désalignement d'une structure-wagon 24 sur laquelle elle est placée. Cet avantage concerne aussi la possibilité de chargement et de déchargement des véhicules 12 alors que la semi-remorque est déjà ou encore en place sur la structure-wagon.

Les manoeuvres de mise en place décrites ci-après nécessitent des moyens de liaison mécanique temporaire non représentés, par exemple, de support et de fixation temporaire entre le châssis de la semi-remorque et le corps de la structure ferroviaire de manière à transmettre à cette structure ferroviaire la poussée vers le haut et la descente nécessaires au mouvement de désengagement puis d'engagement des extrémités 25,26 de bras parallèles 27,28 en brancard de la structure-wagon dans les structures de réception à immobilisation du bogie 23.

Ces moyens de liaison mécanique temporaire, et plus particulièrement de support et de fixation temporaire, peuvent prendre différentes formes techniques.

Il peut s'agir de simples consoles effaçables, par exemple par rabattement, lesdites consoles pouvant être équipées de verrous normalisés, par exemple ceux connus dans la normalisation ISO sous verrous tournants et coopérer avec des pièces réceptrices ISO.

Il peut s'agir aussi de simples éléments transversaux de liaison mécanique temporaire destinés à réunir les longerons du châssis de la semi-remorque aux éléments longitudinaux de la structure ferroviaire.

Il peut s'agir encore d'éléments transversaux passant sous le châssis de la semi-remorque.

Bien d'autres moyens équivalents sont possibles.

De façon complémentaire et en référence aux figures de 6 à 12, on décrira les phases de transfert dans une des structures ferroviaires porteuses 24 du type à fond récepteur plat surbaissé 29 et à extrémité avant de pivotement 30 coopérant avec un pivot 31 de bogie 23 et à extrémité arrière ouverte 32 présentant les deux bras parallèles 27 et 28 à la manière d'un brancard. Les extrémités 25 et 26 de ces bras viennent s'engager dans des structures réceptrices, présentes de part et d'autre du pivot 31 de bogie et aux extrémités d'une traverse commune d'accouplement 33 portée à pivotement par la crapaudine du bogie commun 23 à deux structures ferroviaires adjacentes.

Pour décrire la mise en place de la semi-remorque et la constitution du train, on suppose la structure ferroviaire 24 déjà en position oblique inclinée dans laquelle elle se trouve habituellement pour le chargement ou le déchargement.

La semi-remorque 1 est amenée en marche arrière par le tracteur jusqu'à son engagement sur la structure ferroviaire porteuse 24.

Lorsque son train de roues 4 est arrivé en position sur le fond plat surbaissé 29 de la structure-wagon 24, on remonte par le moyen de soutien et de levage 7 le châssis 2 de la semi-remorque pour procéder au désaccouplement. Après désaccouplement, on abaisse le châssis jusqu'à la structure-wagon qui se trouve en position oblique, extrémité avant au sol. On établit la liaison mécanique temporaire entre le châssis et la structure-wagon et on actionne le moyen de soutien et de levage qui, par appui sur le sol, fait remonter l'ensemble jusqu'à une hauteur suffisante pour permettre, après pivotement ou mouvement longitudinal d'association, l'engagement des extrémités 25 et 26 du brancard dans les structures réceptrices d'accouplement de la traverse d'accouplement 33 du bogie 23.

Le mouvement de rabattement en pivotement s'effectue sous l'effet d'une force latérale provenant, par exemple, de l'entraînement des roues du moyen de soutien et de relevage 7. Ce déplacement de rabattement a pour but d'amener par un mouvement de pivotement la structure-wagon 24 dans l'alignement du train. Il suffit alors de remonter le bras pivotant 8 pour abaisser les extrémités du brancard sur ou dans les structures réceptrices de la traverse d'accouplement 33 du bogie 23.

Le déchargement s'effectue de façon rigoureusement inverse. L'ensemble est relevé, désaccouplé et dévié en oblique.

Après mise en position d'accouplement du tracteur 6 et de la semi-remorque 1, celle-ci est désolidarisée de la structure-wagon et accouplée au tracteur par sa sellette.

Bien entendu, il est possible de charger ou de décharger directement les véhicules transportés, alors que la semi-remorque se trouve déjà ou encore dans la structure wagon.

Pour ce faire, intervient le plateau supérieur 14 mobile et inclinable par les dispositifs de levage intégrés aux poteaux d'angle.

La semi-remorque est placée en position inclinée dans laquelle son extrémité avant 21 touche le sol.

Dans le cas d'un chargement, on incline le plan supérieur 14 jusqu'à la position inférieure la plus basse de son extrémité avant, on monte éventuellement la rampe d'accès 19 à l'extrémité avant 21 de la semi-remorque et les voitures 12 accèdent à leur position sur le plateau supérieur par leurs propres moyens. On redresse à l'horizontale puis on monte le plan supérieur 14 à l'aide du système de levage. On fait accéder les voitures au plan inférieur 13 et on bascule la semi-remorque à l'horizontale par le moyen de soutien et de levage 7.

Le déchargement s'effectue de façon exactement inverse. Les voitures du niveau inférieur sont évacuées en premier après l'inclinaison de la remorque vers le bas. La même opération est effectuée plateau supérieur 14 incliné vers l'avant.

Les figures illustratives de 6 à 12 ont pour but la représentation des possibilités conférées par cette semi-remorque dans le cadre des opérations de transfert propres à une application à un transport mixte rail-route de semi-remorques et dans le cas particulier du transport de véhicules.

Il faut préciser que non seulement le type de dissociation du convoi ferroviaire par pivotement est visé, mais qu'au contraire, il peut s'agir tout aussi bien de la dissociation du convoi par mouvement longitudinal comme par exemple celle décrite dans les brevets antérieurs du déposant.

Dans ce cas seule la fonction de levage du moyen de soutien et de levage est nécessaire.

## Revendications

1. Semi-remorque de transport routier se composant d'un châssis (2), d'un train de roues (4) portant le châssis (2), d'un plan de chargement inférieur fixe (13) et d'une carrosserie formée au moins de quatre poteaux (17) et (18) selon deux couples transversaux (15) et (16), caractérisée en ce qu'elle comprend d'une part vers l'avant et en sous-face de son châssis (2) un moyen de support et de levage (7), pour l'abaissement du châssis (2) en inclinaison vers l'avant et son relevage, et d'autre part, en vue de son chargement par l'avant, un plateau supérieur de chargement (14), mobile verticalement sous l'effet de dispositifs de levage propres prévus dans chaque couple transversal (15) ou (16), ledit plateau supérieur (14) venant s'incliner vers l'avant en position de chargement par l'avant, par exemple de véhicules, ou servant de structure de toit dans le cas d'un transport classique de marchandises.

2. Semi-remorque de transport routier selon la revendication 1 caractérisée en ce que le moyen de soutien et de levage (7) permet l'inclinaison de la remorque jusqu'au contact de son extrémité avant (21) avec le sol (20).

3. Semi-remorque de transport routier selon la revendication 1 ou 2 caractérisée en ce que le moyen de soutien et de levage (7) est en contact avec le sol (20) par l'intermédiaire d'un moyen de roulement.

4. Semi-remorque de transport routier selon la revendication précédente caractérisée en ce que le moyen de roulement est à orientation fixe transversale.

5. Semi-remorque de transport routier selon la revendication 3 caractérisée en ce que le moyen de roulement est libre en orientation.

6. Semi-remorque de transport routier selon la revendication 3 caractérisée en ce que le moyen de roulement en contact avec le sol est un ensemble roulant (10) formé de deux roues jumelées.

7. Semi-remorque de transport routier selon la revendication précédente caractérisée en ce que le moyen de roulement en contact avec le sol est motorisé.

8. Semi-remorque de transport routier selon la revendication 1 ou 2 caractérisée en ce que la semi-remorque présente des moyens de liaison mécanique temporaire avec une structure qui la porte.

9. Semi-remorque de transport routier selon la revendication précédente caractérisée en ce que les moyens de liaison mécanique temporaire sont des consoles effaçables.

10. Semi-remorque de transport routier selon la revendication 7 caractérisée en ce que les moyens de liaison mécanique temporaire sont des éléments transversaux réunissant son châssis et la structure qui la porte.

11. Semi-remorque de transport routier selon l'une des revendications 7 à 10 caractérisée en ce que la structure qui la porte est une structure-wagon.

12. Procédé de chargement/déchargement d'une semi-remorque en véhicules routiers constituant son chargement en utilisant les moyens selon les revendications précédentes caractérisé en ce que l'on incline la semi-remorque vers l'avant jusqu'à contact de son extrémité avant (21) avec le sol (20), à l'aide du moyen de soutien et de levage (7), que l'on incline le plateau supérieur (14) jusqu'à la position la plus basse de son extrémité avant, que l'on place, en cas de besoin, une rampe d'accès (19) à l'extrémité avant et que l'on charge le plateau supérieur (14) en véhicules, que l'on monte le plateau supérieur (14) et que l'on charge le plan inférieur (13), que l'on enlève la rampe et que l'on relève la semi-remorque jusqu'à sa position de roulage.

13. Procédé selon la revendication 12 caractérisé en ce que l'on utilise le moyen de soutien et de levage (7) et les moyens mécaniques de liaison temporaire de la semi-remorque avec une structure pour soulever/abaisser une structure-wagon (24) portant la semi-remorque en vue de son désengagement/engagement du bogie (23) et en ce que l'on utilise en plus le moyen de roulement dont est pourvu le moyen de soutien et de levage (7) pour pivoter en rabattement d'alignement et inversement la structure-wagon (24) autour d'une de ses extrémités en vue de l'alignement et du désalignement en oblique par rapport au convoi ferroviaire dans lequel est insérée la structure-wagon (24).

14. Procédé selon la revendication 12 caractérisé en ce que l'on utilise le moyen de soutien et de levage (7) et les moyens mécaniques de liaison temporaire de la semi-remorque avec une structure pour soulever/abaisser une structure-wagon (24) portant la semi-remorque en vue de son désengagement/engagement du bogie (23) et sa dissociation du convoi ferroviaire par un mouvement longitudinal.

## Claims

1. Road transport semi-trailer consisting of a chassis (2), a wheel set (4) carrying the chassis (2), a fixed lower loading level (13) and a body formed by at least four posts (17) and (18) in accordance with two transverse couplings (15) and (16), characterised in that it features, on the one hand, a supporting and lifting means (7) towards the front and on the underside of its chassis (2), for lowering the chassis (2) at an angle towards the front and raising it again, and on the other hand, in order to load it from the front, an upper loading platform (14) which is adapted to be moved vertically by the action of suitable lifting devices provided in each transverse coupling (15) or (16), said upper platform (14) now being tilted forwards into the position for loading, for example, vehicles from the front, or serving as a roof structure in the case where conventional goods are to be transported.

2. Road transport semi-trailer according to claim 1, characterised in that the supporting and lifting means (7) makes it possible for the trailer to be tilted until its front end (21) makes contact with the ground (20).

3. Road transport semi-trailer according to claim 1 or 2, characterised in that the supporting and lifting means (7) is in contact with the ground (20) via a rolling means.

4. Road transport semi-trailer according to the preceding claim, characterised in that the rolling means has transverse fixed orientation.

5. Road transport semi-trailer according to claim 3, characterised in that the rolling means has free orientation.

6. Road transport semi-trailer according to claim 3, characterised in that the rolling means in contact with the ground is a rolling assembly (10) formed by two twin wheels.

7. Road transport semi-trailer according to the preceding claim, characterised in that the rolling means in contact with the ground is motorised.

8. Road transport semi-trailer according to claim 1 or 2, characterised in that the semi-trailer has means of temporary mechanical connection to a structure carrying it.

9. Road transport semi-trailer according to the preceding claim, characterised in that the means of temporary mechanical connection are retractable outriggers.

10. Road transport semi-trailer according to claim 7, characterised in that the means of temporary mechanical connection are transverse elements joining its chassis and the structure carrying the semi-trailer.

11. Road transport semi-trailer according to any of claims 7 to 10, characterised in that the structure carrying it is a wagon structure.

12. Method for loading and unloading a semi-trailer with road vehicles that make up its load, using the means according to the preceding claims, characterised in that the semi-trailer is tilted forwards with the help of the supporting and lifting means (7), until its front end (21) makes contact with the ground (20), tilting the upper platform (14) until its front end reaches its lowest position, if necessary placing an access ramp (19) at the front end and loading the upper platform (14) with vehicles, raising the upper platform (14) and loading the lower level (13), removing the ramp and raising up the semi-trailer to its rolling position.

13. Method according to claim 12, characterised by using the supporting and lifting means (7) and the mechanical means for temporarily connecting the semi-trailer to a structure in order to raise and lower a wagon structure (24) carrying the semi-trailer for the purpose of disengaging it from and engaging it with the bogie (23), and by further using the rolling means with which the supporting and lifting means (7) is provided in order to swing the wagon structure (24) into and out of alignment about one of its ends for the purpose of bringing it obliquely into and out of alignment with respect to the rail convoy in which the wagon structure (24) is inserted.

14. Method according to claim 12, characterised by using the supporting and lifting means (7) and the mechanical means for temporarily connecting the semi-trailer to a structure in order to raise and lower a wagon structure (24) carrying the semi-trailer for the purpose of disengaging it from and engaging it with the bogie (23) and separating it from the rail convoy by a longitudinal movement.

## Patentansprüche

1. Sattelauflieger für den Straßentransport, bestehend aus einem Fahrgestell (2), aus einem Radsatz (4), der das Fahrgestell (2) trägt, aus einer feststehenden, unteren Ladefläche (13) und aus einer Karosserie, die aus mindestens vier Pfosten (17) und (18) entsprechend zwei Querspanten (15) und (16) gebildet ist,
**dadurch gekennzeichnet**, daß
der Sattelauflieger einerseits nach vorne und auf der Unterseite seines Fahrgestells (2) eine Trag- und Hubvorrichtung (7) für das Senken des Fahrgestells (2) mit einer Neigbewegung nach vorne und dessen Wiederaufrichten aufweist, und andererseits, für dessen Beladen durch die vordere Seite, eine obere Ladepritsche (14) aufweist, die mit Hilfe von eigenen Hubvorrichtungen, die in jedem Querspant (15) oder (16) vorgesehen sind, senkrecht verstellbar ist, wobei die besagte obere Ladepritsche (14) nach vorne in die Stellung für ein Beladen durch die vordere Seite, beispielsweise von Fahrzeugen geneigt wird, oder als Dachaufbau im Falle eines klassischen Warentransports dient.

2. Sattelauflieger für den Straßentransport nach Anspruch 1,
**dadurch gekennzeichnet,** daß
die Trag- und Hubvorrichtung (7) das Neigen des Sattelaufliegers bis zu der Berührung seines vorderen Endes (21) mit dem Boden (20) ermöglicht.

3. Sattelauflieger für den Straßentransport nach Anspruch 1 oder 2,
**dadurch gekennzeichnet,** daß
die Trag- und Hubvorrichtung (7) über einen Rollgang mit dem Boden (20) in Berührung steht.

4. Sattelauflieger für den Straßentransport nach dem vorhergehenden Anspruch,
**dadurch gekennzeichnet,** daß
der Rollgang in Querrichtung fest ausgerichtet ist.

5. Sattelauflieger für den Straßentransport nach Anspruch 3,
**dadurch gekennzeichnet,** daß
der Rollgang beliebig ausgerichtet werden kann.

6. Sattelauflieger für den Straßentransport nach Anspruch 3,
**dadurch gekennzeichnet,** daß
der Rollgang, der mit dem Boden in Berührung steht, eine fahrbare Vorrichtung (10) ist, die aus zwei Zwillingsrädern besteht.

7. Sattelauflieger für den Straßentransport nach dem vorhergehenden Anspruch,
**dadurch gekennzeichnet,** daß
der Rollgang, der mit dem Boden in Berührung steht, einen Motorantrieb besitzt.

8. Sattelauflieger für den Straßentransport nach Anspruch 1 oder 2,
**dadurch gekennzeichnet,** daß
der Sattelauflieger Einrichtungen für eine vorübergehende mechanische Verbindung mit dem Aufbau, der ihn trägt, aufweist.

9. Sattelauflieger für den Straßentransport nach dem vorhergehenden Anspruch,
**dadurch gekennzeichnet,** daß
die Einrichtungen für eine vorübergehende mechanische Verbindung versenkbare Konsolen sind.

10. Sattelauflieger für den Straßentransport nach Anspruch 7,
**dadurch gekennzeichnet,** daß
die Einrichtungen für eine vorübergehende mechanische Verbindung querliegende Teile sind, die dessen Fahrgestell und den Aufbau, der ihn trägt, verbinden.

11. Sattelauflieger für den Straßentransport nach einem der Ansprüche 7 bis 10,
**dadurch gekennzeichnet,** daß
der Aufbau, der ihn trägt, ein Waggon-Aufbau ist.

12. Verfahren für das Beladen/Entladen eines Sattelaufliegers mit einer Ladung aus Straßenfahrzeugen unter Verwendung der Einrichtungen entsprechend den vorstehenden Ansprüchen,
**dadurch gekennzeichnet,** daß
der Sattelauflieger mit Hilfe der Trag- und Hubvorrichtung (7) nach vorne geneigt wird, und zwar bis dessen vorderes Ende (21) mit dem Boden (20) in Berührung kommt, daß die obere Ladepritsche (14) bis zu der tiefsten Stellung ihres vorderen Endes geneigt wird, daß, wenn erforderlich, eine Laderampe (19) an dem vorderen Ende angeordnet wird, und daß die obere Ladepritsche (14) mit Fahrzeugen beladen wird, daß die obere Ladepritsche (14) in obere Stellung gebracht wird und die untere Ladefläche (13) beladen wird, daß die Laderampe ausgebaut wird, und daß der Sattelauflieger bis zu der Fahrstellung wieder angehoben wird.

13. Verfahren nach Anspruch 12,
**dadurch gekennzeichnet,** daß
die Trag- und Hubvorrichtung (7) und die Einrichtungen für eine vorübergehende mechanische Verbindung des Sattelaufliegers zusammen mit einem Aufbau für das Anheben/Senken eines Waggon-Aufbaus (24), der den Sattelauflieger trägt, für das Lösen/Verbinden mit dem Drehgestell (23) verwendet werden, und daß zusätzlich der Rollgang, mit dem die Trag- und Hubvorrichtung (7) versehen ist, verwendet wird, um den Waggon-Aufbau (24) um eines seiner Enden für ein Herumklappen für ein Ausrichten und umgekehrt zu schwenken, zwecks eines Fluchtens und eines Nichtfluchtens in schräger Richtung gegenüber dem Eisenbahnzug, in dem der Waggon-Aufbau (24) eingesetzt ist.

14. Verfahren nach Anspruch 12,
**dadurch gekennzeichnet,** daß
die Trag- und Hubvorrichtung (7) und die Einrichtungen für eine vorübergehende mechanische Verbindung des Sattelaufliegers mit einem Aufbau für das Anheben/Senken eines Waggon-Aufbaus (24), der den Sattelauflieger trägt, für das Lösen/Verbinden mit dem Drehgestell (23) und für dessen Trennung von dem Eisenbahnzug durch eine Verstellung in Längsrichtung verwendet werden.
